# EUROPEAN PATENT SPECIFICATION

(11) **EP 3 113 466 B1**
(45) Date of publication and mention of the grant of the patent: **08.05.2019**
(21) Application number: 16176275.2
(22) Date of filing: 24.06.2016
(51) Int. Cl.: G08B 25/01, H04W 4/90, H04M 1/725

(54) **METHOD AND DEVICE FOR WARNING**
VERFAHREN UND VORRICHTUNG ZUR WARNUNG
PROCÉDÉ ET DISPOSITIF POUR METTRE EN GARDE

(30) Priority: 29.06.2015 CN 201510369984
(43) Date of publication of application: 04.01.2017
(73) Proprietor: Xiaomi Inc., Beijing 100085 (CN)
(72) Inventor: BAO, Xiehao, Beijing 100085 (CN); ZHAO, Xiaoping, Beijing 100085 (CN); QIU, Shiding, Beijing 100085 (CN)
(74) Representative: Nevett, Duncan

(56) References cited:
- CN-A- 102 883 049
- US-A1- 2014 349 603
- Iilab: "Panic Button (Beta) -Android Apps on Google Play", , 20 April 2015 (2015-04-20), XP055294438, Retrieved from the Internet: URL:https://play.google.com/store/apps/det ails?id=org.iilab.pb&hl=en [retrieved on 2016-08-09]

## Description

### TECHNICAL FIELD

The present disclosure relates to a field of mobile communication, and more particularly to a method and device for warning.

### BACKGROUND

With the development of the mobile communication technology, intelligent terminals such as a mobile phone, a tablet computer and so on are more and more used.

By way of example, the intelligent terminal is mobile phones, the mobile phones generally have functions of sending short messages and making calls. When a user encounters emergent situations like a threat of an evildoer, the user may make a warning call to a target contact (e.g., a police or a relative) for help. In the related art, when the user makes a warning call to the target contact for help, the user searches a contact list for the mobile phone number of the target contact manually, or inputs the mobile phone number of the target contact in the mobile phone manually, then operates the mobile phone by a predetermined gesture so as to trigger a calling instruction of the target contact. When the mobile phone receives the calling instruction, it calls the target contact according to the calling instruction, so that the user can call the target contact for help.

US Patent application, Publication No. 2014/0349603A1 relates to a cellular telephone comprising a processor generating and sending an alarm message destined for at least one predefined recipient, in response to an action for the automatic generation of an alert message by a portable telephone to one or more predetermined recipients. It may enable the activation of the alert by a unique intervention adapted to a panic situation, without any hardware changes and preventing unexpected activation.

Panic Button (Beta) -Android Apps on Google Play (URL:https://play.google.com/store/apps/details?id=org.iilab.pb&hl=en) describes an application for a smart phone that sends periodic alerts to a secondary device, when a user of the smart phone applies a specific input action.

CN Patent application, Publication No. 102883049A relates to a hidden alarm unlocking method for a mobile terminal. The method comprises the steps of setting a hidden alarm function; entering an unlocking interface and inputting an unlocking password; judging whether the unlocking password is a hidden alarm unlocking password; and if so, starting a hidden alarm on a background, and sending preset information to an alarm contact; or, if the user unlocks the alarm, entering a normal operating interface.

### SUMMARY OF THE INVENTION

In order to realize beneficial effects of simplifying a warning process, the present disclosure provides a method and a first terminal as defined by the independent claims 1 and 7.

Other aspects of the present disclosure are defined in the dependent claims.

It is to be understood that both the foregoing general description and the following detailed description are exemplary and explanatory only and are not restrictive of the invention, as claimed.

### BRIEF DESCRIPTION OF THE DRAWINGS

In order to describe embodiments of the present disclosure in detail, drawings used for describing embodiments will be referred as below. Obviously, the following drawings described are only some of embodiments of the present disclosure. The skilled in the art may obtain other drawings according to these drawings without any creative work.
Fig. 1 is a schematic diagram showing an implementation environment related to a method for warning provided by embodiments of the present disclosure;
Fig. 2 is a flow chart showing a method for warning according to an illustrative embodiment of the present disclosure;
Fig. 3-1 is a flow chart showing another method for warning according to an illustrative embodiment of the present disclosure;
Fig. 3-2 is a flow chart showing the method provided by the embodiment shown in Fig. 3-1, in which it is determined whether a trigger instruction is a predetermined warning instruction if a trigger interface is a locking interface;
Fig. 3-3 is a flow chart showing the method provided by the embodiment shown in Fig. 3-1, in which a terminal processes a communication message after receiving the communication message sent from another terminal if the terminal is in a silence state;

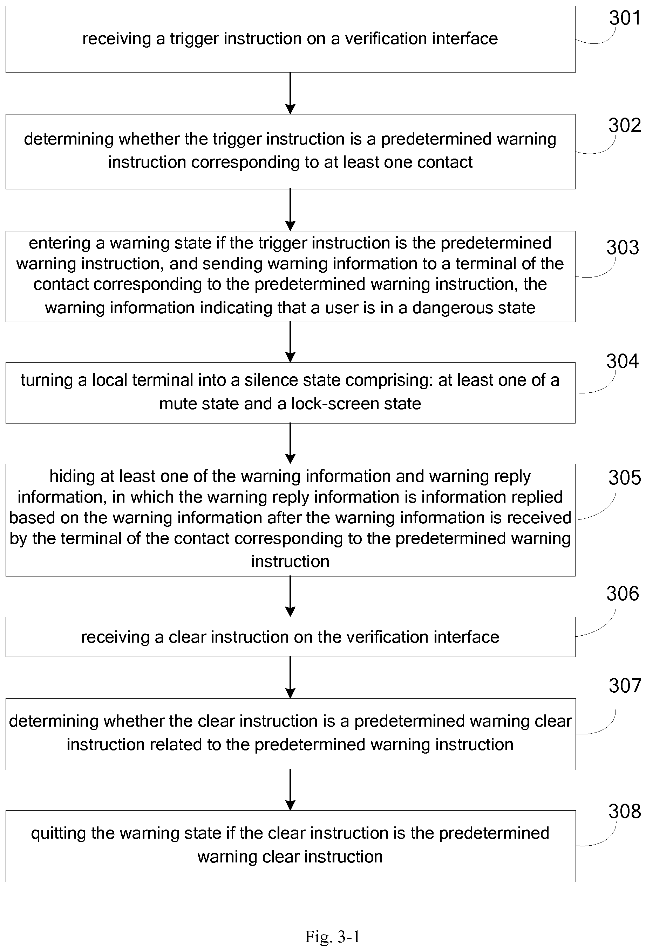

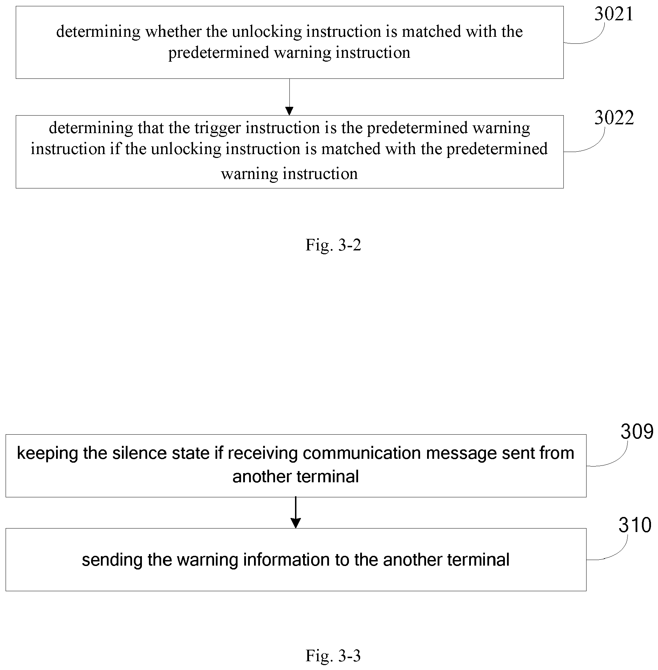

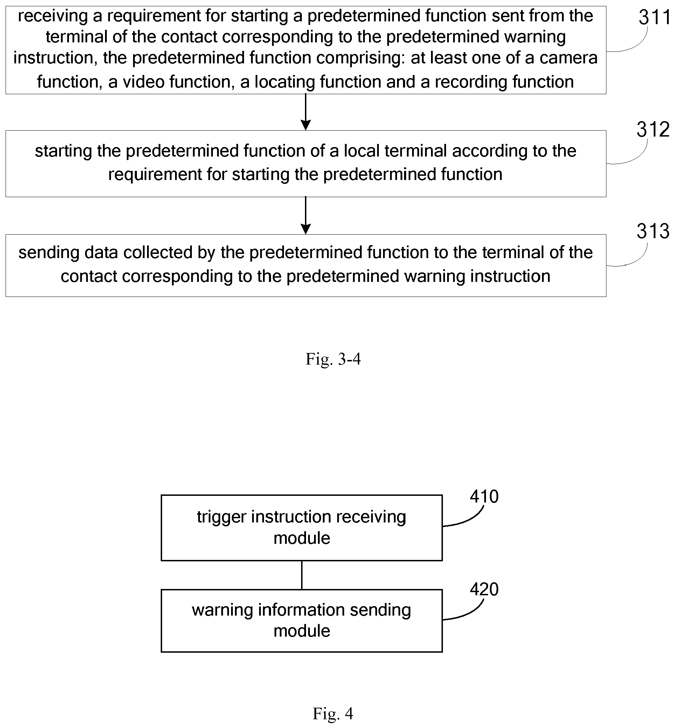

Fig. 3-4 is a flow chart showing the method provided by the embodiment shown in Fig. 3-1, in which a terminal processes a starting requirement after receiving a requirement for starting a predetermined function sent from another terminal;
Fig. 4 a block diagram of a device for warning according to an illustrative embodiment of the present disclosure;

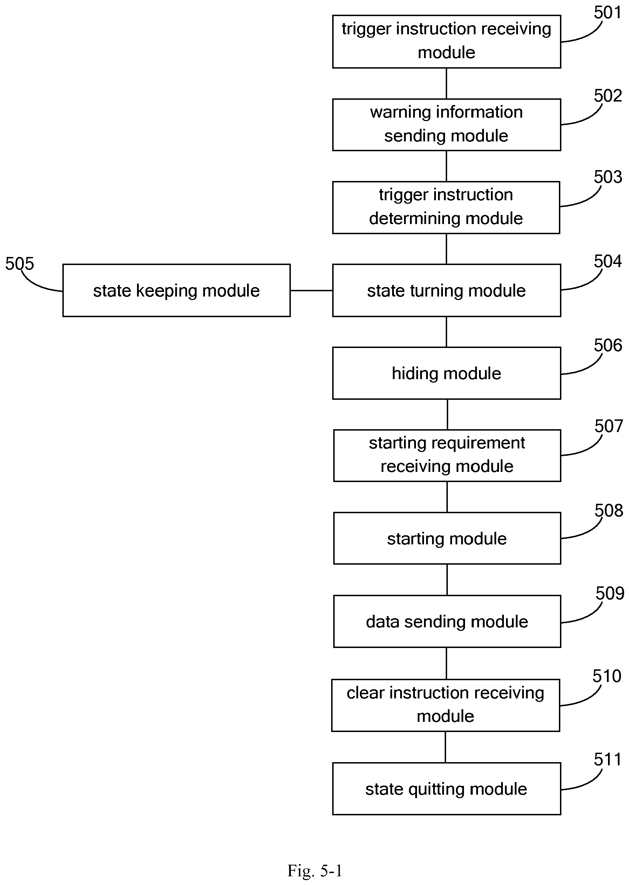

Fig. 5-1 is a block diagram of another device for warning according to an illustrative embodiment of the present disclosure;

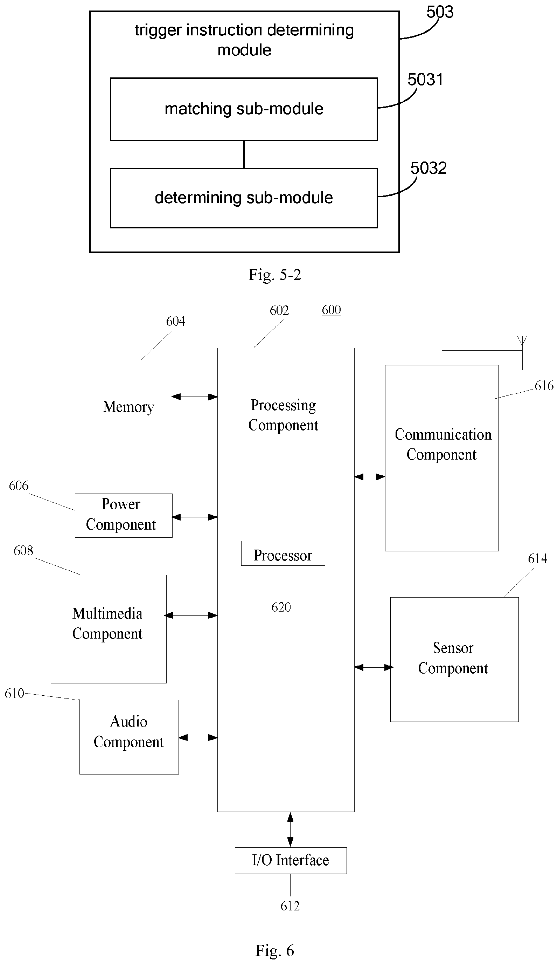

Fig. 5-2 is a block diagram of a trigger instruction determining module provided by the embodiment shown in Fig. 5-1;
Fig. 6 is a block diagram of a device for warning according to an illustrative embodiment.

The accompanying drawings, which are incorporated in and constitute a part of this specification, illustrate embodiments consistent with the invention and, together with the description, serve to explain the principles of the invention.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

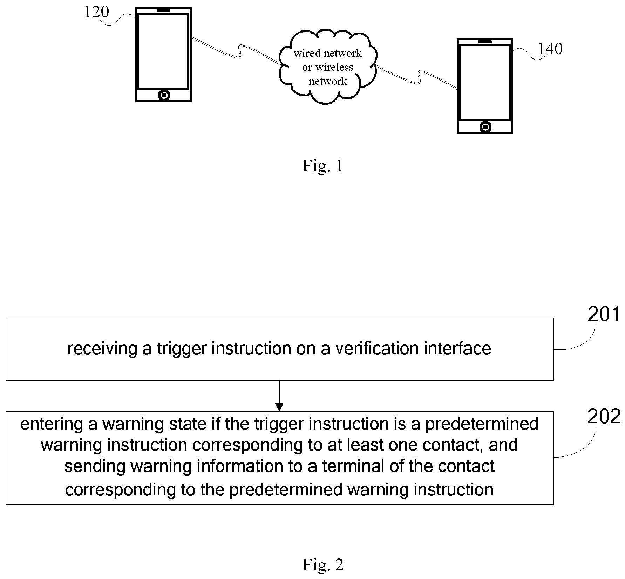

Fig. 1 is schematic diagram showing an implementation environment related to a method for warning provided by embodiments of the present disclosure. The implementation environment may include a first device, such as a first terminal 120 and a second device, such as a second terminal 140.

The first terminal 120 may be an electronic device with a verification function and a function of sending warning information, such as a smart phone and a tablet computer. The first terminal 120 may have functions of sending a short message and making a call. The first terminal 120 may be configured to send warning information. In particular, the first terminal 120 may send warning information to the second terminal 140 by means of sending the short message or making the call. Preferably, the first terminal 120 may be provided with clients such as a microblog, a social application and an email. The first terminal 120 may send warning information to the second terminal 140 by the clients installed on the first terminal 120, in which the social application is such as a QQ, a WeChat, a LinkedIn and a MiTalk. Preferably, the first terminal 120 may have a camera function, a video function, a recording function, a locating function, a warning information generation function, a warning information hiding function and a state switching function.

The first terminal 120 may be communicated with the second terminal 140 via a wired network or a wireless network, which is not limited by the present disclosure.

The second terminal 140 may be an electronic device receiving warning information sent from the first terminal 120, such as a smart phone and a tablet computer. The second terminal 140 may be a terminal of at least one contact corresponding to a predetermined warning instruction. The second terminal 140 may have a function of sending a starting requirement for starting a predetermined function, such as a camera function, a video function, a locating function and a recording function, to the first terminal 120. The first terminal 120 may start the predetermined function based on the requirement for starting the predetermined function sent from the second terminal 140, collect data by the predetermined function and send the collected data to the second terminal 140.

In the embodiment above, the first terminal 120 and the second terminal 140 may be exchanged, that is, the first terminal 120 may have all functions of the second terminal 140 and the second terminal 140 may have all functions of the first terminal 120. It should be noted that, the first terminal 120 with the functions of itself may also have all functions of the second terminal 140 and the second terminal 140 with the functions of itself may also have all functions of the first terminal 120. The first terminal 120 and the second terminal 140 may be same or different, which is not limited by the present disclosure.

Fig. 2 is a flow chart showing a method for warning according to an illustrative embodiment of the present disclosure. The embodiment takes the method for warning applied to the first terminal 120 in the implementation environment shown in Fig. 1 as an example. With reference to Fig. 2, the method for warning may include following steps.

In step 201, a trigger instruction is received on a verification interface.

In step 202, a warning state is entered if the trigger instruction is a predetermined warning instruction corresponding to at least one contact of the first terminal, and warning information is sent to a terminal of the contact corresponding to the predetermined warning instruction. The warning information indicates that a user is in a dangerous state. The step of entering a warning state may be preceded by a step of determining whether the trigger instruction is a predetermined warning instruction corresponding to at least one contact.

Before step 202, the method may further include: determining whether the trigger instruction is the predetermined warning instruction corresponding to at least one contact.

In conclusion, with the method for warning according to embodiments of the present disclosure, the trigger instruction is received on the verification interface, a warning state is entered if the trigger instruction is the predetermined warning instruction corresponding to at least one contact, and warning information is sent to the terminal of the contact corresponding to the predetermined warning instruction. By sending warning information to the terminal of the contact corresponding to the predetermined warning instruction if the trigger instruction is the predetermined warning instruction, it is possible to solve a problem of complicated warning process in the related art and to realize beneficial effects of simplifying the warning process.

Preferably, when the verification interface is a locking interface, step 201 may include: receiving an unlocking instruction on the locking interface; the method further includes: determining whether the unlocking instruction is matched with the predetermined warning instruction; determining that the trigger instruction is the predetermined warning instruction if the unlocking instruction is matched with the predetermined warning instruction. Preferably, the method further includes: turning a local terminal or the first terminal 120 into a silence state, the silence state preferably including at least one of a mute state and a lock-screen state. The turning step preferably is performed after the warning information has been sent to the terminal of the at least one contact.

Preferably, the method further includes: keeping the silence state if receiving a communication message sent from another terminal; sending the warning information to the another terminal.

Preferably, the method further includes: hiding at least one of the warning information and any received warning reply information, in which the warning reply information is information replied based on the warning information after the warning information is received by the terminal of the contact corresponding to the predetermined warning instruction. The warning reply information may be information replied by a terminal of the at least one contact, such as the second terminal 140. The warning reply information may be received at the first terminal 120 and processed by the first terminal 120.

Preferably, the method further includes: receiving a requirement for starting a predetermined function sent from the terminal of the contact corresponding to the predetermined warning instruction, the predetermined function including: at least one of a camera function, a video function, a locating function and a recording function; starting the predetermined function of a local terminal according to the requirement for starting the predetermined function; sending data collected by the predetermined function to the terminal of the contact corresponding to the predetermined warning instruction.

Preferably, the method further includes: receiving a clear instruction on the verification interface; determining whether the clear instruction is a predetermined warning clear instruction related to the predetermined warning instruction; quitting the warning state if the clear instruction is the predetermined warning clear instruction.

Preferably, in step 203, sending warning information to a terminal of the contact corresponding to the predetermined warning instruction includes: sending the warning information to the terminal of the contact corresponding to the predetermined warning instruction in at least one of following three ways: sending a short message including the warning information to the terminal of the at least one contact corresponding to the predetermined warning instruction; giving a call to the terminal of the at least one contact, reporting the warning information to a terminal of any one of the at least one contact answering the call if the any one of the at least one contact answers the call; sending the warning information to the terminal of the at least one contact via a client installed on the local terminal, the client installed on the local terminal including: at least one of a microblog, a social application and an email.

Preferably, in step 203, sending warning information to a terminal of the contact corresponding to the predetermined warning instruction includes: sending the warning information to the terminal of the contact corresponding to the predetermined warning instruction at a predetermined time interval, the warning information including danger indicating information and current positional information of the user.

In conclusion, with the method for warning according to embodiments of the present disclosure, the trigger instruction is received on the verification interface, a warning state is entered if the trigger instruction is the predetermined warning instruction corresponding to at least one contact, and warning information is sent to the terminal of the contact corresponding to the predetermined warning instruction. By sending warning information to the terminal of the contact corresponding to the predetermined warning instruction if the trigger instruction is the predetermined warning instruction, it is possible to solve a problem of complicated warning process in the related art and to realize beneficial effects of simplifying the warning process.

Fig. 3-1 is a flow chart showing another method for warning according to an illustrative embodiment of the present disclosure. The embodiment takes the method for warning applied to the first terminal 120 in the implementation environment shown in Fig. 1 as an example. With reference to Fig. 3-1, the method for warning may include following steps.

In step 301, the trigger instruction is received on the verification interface.

In embodiments of the present disclosure, the terminal is supposed to be the first terminal 120 in the implementation environment shown in Fig. 1, the verification interface may be triggered by operating the first terminal 120 by a predetermined gesture. For example, the verification interface may be the locking interface of the first terminal 120, and the locking interface may be triggered by operating a lock button on the first terminal 120 by the user. If the verification interface is the locking interface of the first terminal 120, the trigger instruction received from the first terminal 120 on the verification interface may be: the trigger instruction received from the first terminal 120 on the locking interface, in which the trigger instruction may include: any one of a numeric password, gesture information, fingerprint information and voice information.

The user may verify an identity on the verification interface. The verification interface may be the locking interface, and also be other predetermined interfaces used for warning. The user may trigger the first terminal 120 to show the verification interface by a predetermined operation (such as a predetermined gesture operation), for example, when the verification interface is a voice receiving interface, the user may trigger a display of the voice receiving interface by a slide up gesture or a slide down gesture. When the user speaks the predetermined voice clip (such as "call the police") to the voice receiving interface currently displayed on the first terminal 120, it should be considered the user triggers the trigger instruction.

When the user triggers the trigger instruction on the verification interface, the first terminal 120 may receive the trigger instruction on the verification interface. For example, in some embodiments of the present disclosure, if the verification interface is the locking interface of the first terminal 120, and the trigger instruction includes gesture information, it is assumed that the trigger instruction may be the trigger instruction including gesture A.

In step 302, it is determined whether the trigger instruction is a predetermined warning instruction corresponding to at least one contact.

When the first terminal 120 receives a trigger instruction, the first terminal 120 determines whether the trigger instruction is the predetermined warning instruction, in which the predetermined warning instruction may include: any one of a predetermined warning password (such as 1207), predetermined gesture information (such as a slide gesture with a track of " 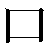 "), predetermined fingerprint information (such as a fingerprint of a thumb of somebody) and predetermined voice information (such as the voice "call the police"). The predetermined warning instruction is corresponding to at least one contact. A corresponding relationship between the predetermined warning instruction and the at least one contact may be stored in the first terminal 120, and there is at least one predetermined warning instruction stored in the first terminal 120. In practice, because the predetermined warning instruction may include the predetermined gesture information, the corresponding relationship between the predetermined gesture information and the at least one contact may be stored in the first terminal 120. In some embodiments of the present disclosure, two predetermined warning instructions are stored in the first terminal 120 and the predetermined gesture information of the two predetermined warning instructions may be gestures A and B, respectively. The corresponding relationship between the predetermined warning instruction and the contacts stored in the first terminal 120 is shown in Table 1 as below:

**Table 1**

| predetermined warning instruction | contacts | sequence of contacts |
|---|---|---|
| gesture A | Xiao Wang (135****4145) | 1 |
| | Mao Mao (138****3824) | 2 |
| | Xiao K (8****3824) | 3 |
| | Hua Hua (159****0012) | 4 |
| gesture B | Hua Hua (159****0012) | 1 |
| | 1231 (189****0300) | 2 |

It should be noted that, as shown in Table 1, the corresponding relationship between the predetermined gesture information of the predetermined warning instruction and the at least one contact may be stored in the first terminal 120. Because each predetermined warning instruction is corresponding to at least one contact, each predetermined gesture information is corresponding to at least one contact. As shown in Table 1, when the corresponding relationship between the predetermined warning instruction and the contact is stored by the first terminal 120, the sequence of contacts may also be stored. Moreover, as shown in Table 1, when the corresponding relationship between the predetermined warning instruction and the contact is stored by the first terminal 120, actually, a corresponding relationship between the predetermined warning instruction and a phone number of the contact is stored.

The verification interface is the locking interface of the first terminal 120, which is taken as an example to describe an embodiment of the present disclosure. Receiving the trigger instruction on the verification interface by the first terminal 120 may include: receiving an unlocking instruction on the locking interface by the first terminal 120. For example, as shown in Fig. 3-2, a flow chart showing a method for determining whether a trigger instruction is a predetermined warning instruction if a verification interface is a locking interface of the first terminal 120, the method for determining whether a trigger instruction is a predetermined warning instruction by the first terminal 120 may include following steps.

In sub-step 3021, it is determined whether the unlocking instruction is matched with the predetermined warning instruction.

For example, the first terminal 120 may first match the unlocking instruction with the predetermined unlocking instruction. If the unlocking instruction is not matched with the predetermined unlocking instruction, the first terminal 120 matches the unlocking instruction with the predetermined warning instruction.

When the verification interface of the first terminal 120 is the locking interface, the predetermined unlocking instruction may be also stored in the first terminal 120. In practice, the predetermined unlocking instruction may include: any one of a predetermined unlocking password, predetermined gesture information, predetermined fingerprint information and predetermined voice information. Therefore, the predetermined unlocking instruction stored in the first terminal 120 may be the unlocking instruction including any one of the predetermined unlocking password, the predetermined gesture information, the predetermined fingerprint information and the predetermined voice information. The predetermined unlocking instruction stored in the first terminal 120 may include predetermined gesture information: gesture C and gesture D, and the predetermined unlocking password: 1233 respectively, which is taken as an example to describe an embodiment of the present disclosure. For example, the predetermined unlocking instruction stored in the first terminal 120 may be shown in Table 2 below:

**Table 2**

| predetermined unlocking instruction |
|---|
| gesture C |
| gesture D |
| 1233 |

As shown in Table 2, the predetermined unlocking instruction stored in the first terminal 120 may include predetermined gesture information: gesture C and gesture D, and the predetermined unlocking password: 1233. When the unlocking instruction (the trigger instruction) is received by the first terminal 120, the first terminal 120 matches the gesture information of the unlocking instruction with the predetermined gesture information of the predetermined unlocking instruction. For example, the first terminal 120 matches the gesture A of the unlocking instruction with the predetermined gesture information of the predetermined unlocking instruction shown in Table 2.

When the unlocking instruction is not matched with the predetermined unlocking instruction, the first terminal 120 matches the unlocking instruction with the predetermined warning instruction. As described above, the gesture A of the unlocking instruction is not matched with the predetermined gesture information of the predetermined unlocking instruction, and thus the first terminal 120 matches the gesture A of the unlocking instruction with the predetermined gesture information of the predetermined warning instruction. It is known from the corresponding relationship between the predetermined warning instruction and the contact stored in Table 1 that, the predetermined gesture information of the predetermined warning instruction stored in the first terminal 120 is: gesture A and gesture B, respectively. The first terminal 120 matches the gesture A of the unlocking instruction with the gestures A and B of the predetermined warning instruction.

In sub-step 3022, the trigger instruction is determined to be the predetermined warning instruction if the unlocking instruction is matched with the predetermined warning instruction.

When the unlocking instruction is determined to be matched with the predetermined warning instruction by the first terminal 120, the trigger instruction is determined to be the predetermined warning instruction by the first terminal 120. As shown in sub-step 3021, the gesture A of the unlocking instruction is matched with the gesture A of the predetermined warning instruction, and thus the unlocking instruction (the trigger instruction) including gesture A is determined to be the predetermined warning instruction by the first terminal 120.

In step 303, a warning state is entered if the trigger instruction is the predetermined warning instruction, and warning information is sent to a terminal of the contact corresponding to the predetermined warning instruction, the warning information indicates that a user is in a dangerous state.

If in step 302, the trigger instruction is determined to be the predetermined warning instruction by the first terminal 120, the first terminal 120 enters a warning state and the warning information is sent to the terminal of the contact corresponding to the predetermined warning instruction. In embodiments of the present disclosure, the warning information may at least include: danger indicating information and current positional information of the user, which is used for indicating the user is in a dangerous state, in which the danger indicating information may be predetermined by the user and stored in the first terminal 120 and the current positional information of the user may be obtained by the locating function of the first terminal 120 itself in real-time. For example, the warning information may be "I'm facing a threat of an evildoer at place M, help me quickly".

Preferably, the warning information may further include: a recording, a picture, a video, in which the recording may be recorded by the recording function of the first terminal 120 if the trigger instruction is determined to be the predetermined warning instruction by the first terminal 120, the picture may be taken by the camera function of the first terminal 120 if the trigger instruction is determined to be the predetermined warning instruction by the first terminal 120, the video may be obtained by the video function of the first terminal 120 if the trigger instruction is determined to be the predetermined warning instruction by the first terminal 120. It should be understood that, in order to realize a quick warning effect, the first terminal 120 may control the recording and shooting durations in a predetermined duration. The predetermined duration may be set based on practical situations, which is not limited by embodiments of the present disclosure. For example, the predetermined duration is 5 seconds, i.e., the first terminal 120 may record 5 seconds of voice or film 5 seconds of video. The first terminal 120 may control the number of the pictures in a predetermined range. For example, the first terminal 120 takes a picture. Specifically, information of the recording, picture and video may be added in the warning information, which may improve the reality of the warning information.

When the first terminal 120 enters a warning state, the warning information may be generated. For example, the first terminal 120 may generate at least the danger indicating information and the current positional information of the user, for example, the first terminal 120 may generate the warning information "I'm facing a threat of an evildoer at place M".

After the first terminal 120 generates the warning information, the warning information may be sent to the terminal of the contact corresponding to the predetermined warning instruction. For example, the first terminal 120 sends the warning information to the terminal of the contact "Xiao Wang", "Mao Mao", "Xiao K", "Hua Hua" corresponding to gesture A shown in Table 1.

In embodiments of the present disclosure, the warning information sent from the first terminal 120 to the terminal of the contact corresponding to the predetermined warning instruction may include following three aspects:

In the first aspect, the first terminal 120 sends a short message including the warning information to the terminal of the at least one contact corresponding to the predetermined warning instruction.

For example, the first terminal 120 sends the short message to the terminals of the contacts "Xiao Wang", "Mao Mao", "Xiao K", "Hua Hua" corresponding to gesture A of the predetermined warning instruction, and the short message may include the warning information "I'm facing a threat of an evildoer at place M".

It should be understood that, when the first terminal 120 sends the short message including the warning information to the terminal of the at least one contact corresponding to gesture A, the short message is sent to the terminals of the contacts "Xiao Wang", "Mao Mao", "Xiao K", "Hua Hua" corresponding to gesture A according to the sequence of the contacts stored in Table 1, and the short message may also be sent to the terminals of the contacts "Xiao Wang", "Mao Mao", "Xiao K", "Hua Hua" corresponding to gesture A in a mass texting manner. Specifically, the mass texting manner is used to send the short message including warning information, so that the warning information may be received quickly by each contact of the at least one contact corresponding to gesture A, thus improving a sending efficiency of the warning information.

In the second aspect, the first terminal 120 gives a call to the terminal of the at least one contact, reports the warning information to the terminal of the contact answering the call if any one of the at least one contact answers the call.

For example, the first terminal 120 may give a call to the terminal of the at least one contact corresponding to gesture A according to the sequence of the contacts stored in Table 1, for example, the first terminal 120 may call the contact "Xiao Wang" firstly, and then call the contact "Mao Mao" if the contact "Xiao Wang" does not answer the call, and so on. If the at least one contact corresponding to gesture A answers the call, the first terminal 120 reports the warning information to the terminal of the contact who answers the call. For example, if "Xiao Wang" answers the call, the first terminal 120 reports the warning information "I'm facing a threat of an evildoer at place M" to the terminal of the contact "Xiao Wang". It should be understood that, if the one who answers the call is not the last one of the at least one contact corresponding to the predetermined warning instruction, the first terminal 120 may continue to give a call to a subsequent contact in the sequence of the contacts stored in Table 1 after the call is hung out, or the first terminal 120 may also give no call to the subsequent contact, which is not limited in embodiments of the present disclosure.

In a third aspect, the first terminal 120 sends the warning information to the terminal of the at least one contact via a client installed on the local terminal, the client installed on the local terminal includes: at least one of a microblog, a social application and an email.

In a possible embodiment, the client may be installed on the first terminal 120, and the first terminal 120 sends warning information to the terminal of the at least one contact corresponding to the predetermined warning instruction by the client installed on the first terminal 120. In this case, the first terminal 120 may store the corresponding relationship between the predetermined warning instruction and an account of the client of the at least one contact. For example, if the client installed on the first terminal 120 is the email, the first terminal 120 may store the corresponding relationship between the predetermined warning instruction and an email address of the at least one contact. If the client installed on the first terminal 120 is the social application, the first terminal 120 may store the corresponding relationship between the predetermined warning instruction and an social application account of the at least one contact, for example, if the social application is QQ, the first terminal 120 may store the corresponding relationship between the predetermined warning instruction and a QQ account of the at least one contact. If the client installed on the first terminal 120 is the microblog, the first terminal 120 may store the corresponding relationship between the predetermined warning instruction and a microblog account of the at least one contact. Specifically, when the first terminal 120 stores the corresponding relationships above, a process of which may refer to Table 1, which is no more described in embodiments of the present disclosure.

It should be understood that, in a possible implementation way, a signal of the current positon of the user of the first terminal 120 may be low, resulting in failure of sending warning information by the first terminal 120. Therefore, in embodiments of the present disclosure, in order to improve a success rate of sending the warning information, the first terminal 120 may send the warning information to the terminal of the contact corresponding to the predetermined warning instruction at a predetermined time interval, in which the first terminal 120 may update the warning information according to the predetermined time interval and send the updated warning information to the terminal of the at least contact corresponding to the predetermined warning instruction, so as to ensure that the updated warning information can be received by the terminal of the at least one contact corresponding to the predetermined warning instruction.

In step 304, the local terminal is turned into a silence state including: at least one of a mute state and a lock-screen state.

After the first terminal 120 sends the warning information, the first terminal 120 may be turned into the silence state including: at least one of the mute state (i.e., a sound off state) and the lock-screen state (i.e., a non-lighted screen state). The silence state including the mute state and the lock-screen state is taken as an example to describe an embodiment of the present disclosure.

It should be understood that, when the first terminal 120 is turned into the silence state, if a warning unlocking password is no more input, the first terminal 120 may not be used normally, but the first terminal 120 may receive the communication message sent from another terminal, which may avoid the using of the first terminal 120 by the evildoer and a waste of an electric quantity of the first terminal 120.

In step 305, at least one of the warning information and warning reply information is hidden, in which the warning reply information is information replied based on the warning information after the warning information is received by the terminal of the contact corresponding to the predetermined warning instruction.

The first terminal 120 may hide the warning information after the warning information has been sent successfully, which may prevent the evildoer to obtain the warning information.

It should be understood that, in an embodiment of the present disclosure, after the first terminal 120 sends the warning information to the terminal of the contact corresponding to the predetermined warning instruction, the terminal of the contact corresponding to the predetermined warning instruction may send the warning reply information to the first terminal 120. For example, the terminal of the contact corresponding to the predetermined warning instruction including the second terminal 140 shown in Fig. 1 is taken as an example to describe the present embodiment, and the second terminal 140 may send the warning reply information to the first terminal 120. Specifically, the warning reply information is replied based on the warning information after the second terminal 140 receives the warning information sent from the first terminal 120. The first terminal 120 may receive the warning reply information sent from the second terminal 140, in which the content of the warning reply information is determined by the user of the second terminal 140, which is not limited by embodiments of the present disclosure. It should be understood that, the second terminal 140 may send the warning reply information to the first terminal 120 by the short message or the client installed on the second terminal 140, which is not limited by embodiments of the present disclosure. When the second terminal 140 receives the warning reply information sent from the first terminal 120, the second terminal 140 may be kept in the silence state and hide the warning reply information, which may prevent the evildoer from obtaining the warning reply information.

Specifically, hiding the warning information means no warning information shown on the information displaying interface (e.g., a short message interface or a social application interface) after the warning information is sent, and hiding the warning reply information means no warning reply information shown on the information displaying interface after the warning reply information is received. The first terminal 120 may hide the warning information and the warning reply information by an information hiding property of the first terminal 120.

The embodiment of the present disclosure performs the warning effect in the case of no awareness of the evildoer by hiding the warning information and the warning reply information.

In step 306, a clear instruction is received on the verification interface.

The user may operate the first terminal 120 to trigger the clear instruction, for example, the user operates the first terminal 120 to trigger the verification interface by a predetermined gesture, and then triggers the clear instruction on the verification interface, and the first terminal 120 may receive the clear instruction triggered by the user. Specifically, the clear instruction may include: any one of a numeric password, gesture information, fingerprint information and voice information.

In step 307, it is determined whether the clear instruction is a predetermined warning clear instruction related to the predetermined warning instruction.

When the first terminal 120 receives the clear instruction, the first terminal 120 determines whether the clear instruction is the predetermined warning clear instruction, in which the predetermined warning clear instruction is related to the predetermined warning instruction, that is, the predetermined warning clear instruction may be the same as the predetermined warning instruction, or may not be the same as the predetermined warning instruction, which is not limited by embodiments of the present disclosure. The predetermined warning clear instruction is the same as the predetermined warning instruction, which is taken as an example to describe the embodiment of the present disclosure. When the first terminal 120 receives the clear instruction, the first terminal 120 may match the clear instruction with the predetermined warning instruction, if the clear instruction is the same as the predetermined warning instruction, the clear instruction is determined to be the predetermined warning clear instruction by the first terminal 120, otherwise, the clear instruction is not the predetermined warning clear instruction.

For example, the first terminal 120 determines whether the clear instruction is the clear instruction including gesture A, if the clear instruction is the clear instruction including gesture A, the clear instruction is the predetermined warning clear instruction, and if the clear instruction is not the clear instruction including gesture A, the clear instruction is not the predetermined warning clear instruction. Supposing that the clear instruction received by the first terminal 120 is the clear instruction including gesture A, the clear instruction is determined to be the predetermined warning clear instruction by the first terminal 120.

It should be understood that, in practice, if the predetermined warning clear instruction is not the same as the predetermined warning instruction, the first terminal 120 may store the corresponding relationship between the predetermined warning clear instruction and the predetermined warning instruction. The first terminal 120 may determine whether the clear instruction is the predetermined warning clear instruction according to the corresponding relationship between the predetermined warning clear instruction and the predetermined warning instruction. The predetermined warning clear instruction may include: any one of a predetermined warning clear password, a predetermined warning clear gesture, a predetermined warning clear fingerprint and a predetermined warning clear voice. The corresponding relationship between the predetermined warning clear instruction and the predetermined warning instruction stored in the first terminal 120 may be a corresponding relationship between the predetermined warning clear password and the predetermined gesture information of the predetermined warning instruction, for example, the corresponding relationship between the predetermined warning clear instruction and the predetermined warning instruction stored in the first terminal 120 may be shown in Table 3.

**Table 3**

| predetermined warning instruction | predetermined warning clear instruction |
|---|---|
| gesture A | 1314 |
| gesture B | 5210 |

It is supposed that the clear instruction received by the first terminal 120 is the clear instruction including numeric password 1314, as shown in Table 3, the predetermined warning instruction corresponding to the numeric password 1314 is the predetermined warning instruction including gesture A, the clear instruction including the numeric password 1314 is determined to be the predetermined warning clear instruction by the first terminal 120.

In step 308, the warning state is quitted if the clear instruction is the predetermined warning clear instruction.

If in step 308 the first terminal 120 determines that the clear instruction is the predetermined warning clear instruction, the first terminal 120 quits the warning state. In embodiments of the present disclosure, because the clear instruction received by the first terminal 120 is the predetermined warning clear instruction, the first terminal 120 quits the warning state.

It should be understood that, in the embodiment of the present disclosure, the warning state is described with respect to a normal operation state of the first smart terminal 120. When the first smart terminal 120 is in the warning state, the warning information may be sent preferentially and quickly and the state of the first smart terminal 120 may be turned into at least one of the mute state or the lock-screen state so as to reduce the power consumed by the first terminal 120. Moreover, when the first smart terminal 120 is in the warning state, if the signal of the first terminal 120 at a current moment is low, the first terminal 120 may send the warning information to the terminal of the contact corresponding to the predetermined warning instruction at the predetermined time interval so as to improve the success rate of sending the information.

In the first aspect, in the embedment of the present disclosure, after the first terminal 120 is turned into the silence state, it may receive the communication message sent from another terminal. The communication message may be the communication message sent from the contact of the first terminal 120, and may also be the message sent from a public platform, such as news, a notification. Therefore, as shown in Fig. 3-3, after step 304 of the embodiment shown in Fig. 3-1, the method for warning provided by embodiments of the present disclosure may further include following steps.

In step 309, the silence state is kept if the communication message sent from another terminal is received.

After the first terminal 120 is turned into the silence state, it may keep the silence state if it receives communication message sent from another terminal, which may avoid the waste of an electric quantity of the first terminal 120.

In step 310, the warning information is sent to the another terminal.

When the first terminal 120 is in the silence state, if the communication message sent from the another terminal is received, the first terminal 120 may send the warning information to the another terminal, for example, the first terminal 120 sends the warning information "I'm facing a threat of an evildoer at place M" to the another terminal.

When communication message sent from the another terminal is received, the silence state is kept and the warning information is sent to the another terminal, by which it is possible to avoid the waste of an electric quantity and improve the success rate of warning.

In the second aspect, in the embodiment of the present disclosure, when at least one contact corresponding to the predetermined warning instruction receives the warning information sent from the first terminal 120, the reality of the warning information may be verified for the first terminal 120. Therefore, as shown in Fig. 3-4, after step 303 of the embodiment shown in Fig. 3-1, the method for warning provided by embodiments of the present disclosure may further include following steps.

In step 311, a requirement for starting a predetermined function sent from the terminal of the contact corresponding to the predetermined warning instruction is received, and the predetermined function includes: at least one of a camera function, a video function, a locating function and a recording function.

In a possible embodiment, when the contact corresponding to the predetermined warning instruction determines that the reality of the warning information sent from the first terminal 120 is low, the contact corresponding to the predetermined warning instruction may operate the terminal of the contact corresponding to the predetermined warning instruction to trigger the requirement for starting the predetermined function of the first terminal 120, so as to check the reality of the warning information. For example, the user of the second terminal 140 is supposed to be "Xiao Wang" shown in Table 1, "Xiao Wang" may operate the second terminal 140 to trigger the requirement for starting the predetermined function, after the second terminal 140 receives the requirement for starting the predetermined function triggered by "Xiao Wang", it may send the requirement for starting the predetermined function to the first terminal 120 according to the requirement for starting the predetermined function triggered by "Xiao Wang", and the first terminal 120 may receive the requirement for starting the predetermined function sent from the second terminal 140. Specifically, the predetermined function includes: at least one of a camera function, a video function, a locating function and a recording function. For example, the second terminal 140 may send a requirement for starting the camera function to the first terminal 120 and the first terminal 120 may receive the requirement for starting the camera function sent from the second terminal 140.

In step 312, the predetermined function of a local terminal is started according to the requirement for starting the predetermined function.

The first terminal 120 may start the predetermined function of the first terminal 120 according to the requirement for starting the predetermined function sent from the terminal of the contact corresponding to the predetermined warning instruction, for example, the first terminal 120 starts the camera function of the first terminal 120 according to the requirement for starting the camera function sent from the second terminal 140.

In step 313, data collected by the predetermined function is sent to the terminal of the contact corresponding to the predetermined warning instruction.

After the first terminal 120 starts the predetermined function of the first terminal 120, the data may be collected by the predetermined function of the first terminal 120 and the collected data may be sent to the terminal of the contact corresponding to the predetermined warning instruction. For example, the first terminal 120 starts the camera function of the first terminal 120, a video may be filmed by the video function of the first terminal 120 and the filmed video may be sent to the second terminal 140.

It should be understood that, the first terminal 120 may send the collected data to the second terminal 140 by the short message or the client installed on the first terminal 120, which is not limited by embodiments of the present disclosure.

The method for warning provided by embodiments of the present disclosure starts the predetermined function according to the requirement for starting the predetermined function sent from the terminal of the contact corresponding to the predetermined warning instruction, collects data by the predetermined function and sends the collected data to the terminal of the contact corresponding to the predetermined warning instruction, which ensures the reality of the warning information.

It should be understood that, the sequence of the steps of the method for warning provided by embodiments of the present disclosure may be adjusted appropriately and the steps may be increased or reduced according to practical situations. For example, the sequence of step 304 and step 305 may be adjusted, and changes in the method may be easily obtained by those skilled in the related art within the scope of the technology disclosed by the present disclosure, which may all be covered in the claimed scope of the present disclosure, and thus will not be elaborated herein.

In conclusion, with the method for warning according to embodiments of the present disclosure, the trigger instruction is received on the verification interface, a warning state is entered if the trigger instruction is the predetermined warning instruction corresponding to at least one contact, and warning information is sent to the terminal of the contact corresponding to the predetermined warning instruction. By sending warning information to the terminal of the contact corresponding to the predetermined warning instruction if the trigger instruction is the predetermined warning instruction, it is possible to solve a problem of complicated warning process in the related art and to realize beneficial effects of simplifying the warning process.

An embodiment of a device of the present disclosure below may be used to perform embodiments of the method of the present disclosure. The non-disclosed detail of embodiments of the present disclosure should refer to embodiments of the method of the present disclosure.

Fig. 4 is a block diagram of a device 400 for warning according to an illustrative embodiment of the present disclosure. The device 400 for warning may be implemented as part or entire of the first terminal 120 in the implementation environment shown in Fig. 1 by software, hardware or the combination thereof. The device 400 for warning may include: a trigger instruction receiving module 410 configured to receive a trigger instruction on a verification interface; a warning information sending module 420 configured to enter a warning state if the trigger instruction received by the trigger instruction receiving module 410 is determined to be a predetermined warning instruction corresponding to at least one contact, and to send warning information to a terminal of the contact corresponding to the predetermined warning instruction, the warning information indicating that a user is in a dangerous state.

In one embodiment, the device 400 may further include a module configured to determine whether the trigger instruction received by the trigger instruction receiving module 410 is the predetermined warning instruction corresponding to at least one contact.

In conclusion, with the device for warning according to embodiments of the present disclosure, the trigger instruction is received on the verification interface, a warning state is entered if the trigger instruction is the predetermined warning instruction corresponding to at least one contact, and warning information is sent to the terminal of the contact corresponding to the predetermined warning instruction. By sending warning information to the terminal of the contact corresponding to the predetermined warning instruction if the trigger instruction is the predetermined warning instruction, it is possible to solve a problem of complicated warning process in the related art and to realize beneficial effects of simplifying the warning process.

Fig. 5 is a block diagram of another device 500 for warning according to an illustrative embodiment of the present disclosure. The device 500 for warning may be implemented as part or entire of the first terminal 120 in the implementation environment shown in Fig. 1 by software, hardware or the combination thereof The device 400 for warning may include: a trigger instruction receiving module 501 configured to receive a trigger instruction on a verification interface; a warning information sending module 502 configured to send warning information to a terminal of the contact corresponding to the predetermined warning instruction, the warning information indicating that a user is in a dangerous state if the trigger instruction received by the trigger instruction receiving module 501 is determined to be the predetermined warning instruction.

In one embodiment, the device 500 may further include a module configured to determine whether the trigger instruction received by the trigger receiving module 501 is the predetermined warning instruction corresponding to at least one contact.

Preferably, when the verification interface is a locking interface,
the trigger instruction receiving module 501 is configured to receive an unlocking instruction on the locking interface; the device further includes a trigger instruction determining module 503 configured to determine that the trigger instruction is the predetermined warning instruction if the unlocking instruction is matched with the predetermined warning instruction.

In one embodiment, the device 500 may further include a module configured to determine whether the unlocking instruction received by the trigger instruction receiving module 501 is matched with the predetermined warning instruction.

In an embodiment, the trigger instruction determining module 503 may include: a matching sub-module 5031 configured to match the trigger instruction with the predetermined unlocking instruction if the verification interface is the locking interface, to match the trigger instruction with the predetermined warning instruction if the trigger instruction is not matched with the predetermined unlocking instruction;
a determining sub-module 5032 configured to determine that the trigger instruction received by the trigger instruction receiving module 501 is the predetermined warning instruction if the trigger instruction received by the trigger instruction receiving module 501 is determined to be matched with the predetermined warning instruction by the matching sub-module 5031.

The predetermined unlocking instruction is the unlocking instruction which makes the terminal enter a normal working state. In one embodiment, the terminal is unlocked if the trigger instruction is matched with the predetermined unlocking instruction, and enters the normal working state. The user may use the terminal in the normal working state to perform common functions such as communication, browsing, setting and entertainment. The normal working state should be understood by those skilled in the related art, which will not be elaborated herein.

Preferably, referring to Fig. 5 again, the device 500 for warning may further include: a state turning module 504 configured to turn a local terminal into a silence state including: at least one of a mute state and a lock-screen state.

Preferably, the device 500 for warning may further include: a state keeping module 505 configured to keep the state turning module 504 in the silence state if a communication message is received from another terminal, in which the warning information sending module 502 is further configured to send the warning information to the another terminal.

Preferably, the device 500 for warning may further include: a hiding module 506 configured to hide at least one of the warning information and warning reply information, wherein the warning reply information is information replied based on the warning information after the warning information is received by the terminal of the contact corresponding to the predetermined warning instruction.

Preferably, the device 500 for warning may further include: a starting requirement receiving module 507 configured to receive a requirement for starting a predetermined function sent from the terminal of the contact corresponding to the predetermined warning instruction, the predetermined function comprising: at least one of a camera function, a video function, a locating function and a recording function; a starting module 508 configured to start the predetermined function of a local terminal according to the requirement for starting the predetermined function received by the starting requirement receiving module 507; a data sending module 509 configured to send data collected by the predetermined function started by the starting module 508 to the terminal of the contact corresponding to the predetermined warning instruction.

Preferably, the device 500 for warning may further include: a clear instruction receiving module 510 configured to receive a clear instruction on the verification interface; a state quitting module 511 configured to quit the warning state if the clear instruction received by the clear instruction receiving module 510 is a predetermined warning clear instruction related to the predetermined warning instruction.

In one embodiment, the device 500 may further include a module configured to determine whether the clear instruction received by the clear instruction receiving module 510 is a predetermined warning clear instruction related to the predetermined warning instruction.

Preferably, the warning information sending module 502 is configured to send the warning information to the terminal of the contact corresponding to the predetermined warning instruction in at least one of following three ways: sending a short message comprising the warning information to the terminal of the at least one contact corresponding to the predetermined warning instruction; giving or initiating a call to the terminal of the at least one contact, reporting the warning information to a terminal of any one of the at least one contact answering the call if the any one of the at least one contact answers the call; sending the warning information to the terminal of the at least one contact via a client installed on the local terminal, the client installed on the local terminal comprising: at least one of a microblog, a social application and an email.

Preferably, the warning information sending module 502 is configured to send the warning information to the terminal of the contact corresponding to the predetermined warning instruction at a predetermined time interval, the warning information comprising danger indicating information and current positional information of the user.

In conclusion, with the device for warning according to embodiments of the present disclosure, the trigger instruction is received on the verification interface, a warning state is entered if the trigger instruction is the predetermined warning instruction corresponding to at least one contact, and warning information is sent to the terminal of the contact corresponding to the predetermined warning instruction. By sending warning information to the terminal of the contact corresponding to the predetermined warning instruction if the trigger instruction is the predetermined warning instruction, it is possible to solve a problem of complicated warning process in the related art and to realize beneficial effects of simplifying the warning process.

Fig. 6 is a block diagram of a device 600 for warning according to an illustrative embodiment. For example, the device 600 may be a mobile phone, a computer, a digital broadcasting terminal, a messaging device, a game console, a tablet device, fitness equipment, a Personal Digital Assistant (PDA), etc.

Referring to Fig. 6, the device 600 may include the following one or more components: a processing component 602, a memory 604, a power component 606, a multimedia component 608, an audio component 610, an input/output (I/O) interface 612, a sensor component 614, and a communication component 616.

The processing component 602 typically controls overall operations of the device 600, such as the operations associated with display, telephone calls, data communications, camera operations, and recording operations. The processing component 602 may include one or more processors 620 to execute instructions to perform all or part of the steps in the above described methods. Moreover, the processing component 602 may include one or more modules which facilitate the interaction between the processing component 602 and other components. For instance, the processing component 602 may include a multimedia module to facilitate the interaction between the multimedia component 608 and the processing component 602.

The memory 604 is configured to store various types of data to support the operation of the device 600. Examples of such data include instructions for any applications or methods operated on the device 600, contact data, phonebook data, messages, pictures, video, etc. The memory 604 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 606 provides power to various components of the device 600. The power component 606 may include a power management system, one or more power sources, and any other components associated with the generation, management, and distribution of power in the device 600.

The multimedia component 608 includes a screen providing an output interface between the device 600 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and other gestures on the touch panel. The touch sensors may not only sense a boundary of a touch or swipe action, but also sense a duration time and a pressure associated with the touch or swipe action. In some embodiments, the multimedia component 608 includes a front camera and/or a rear camera. The front camera and/or the rear camera may receive external multimedia data while the device 600 is in an operation mode, such as a photographing mode or a video mode. Each of the front camera and the rear camera may be a fixed optical lens system or have focus and optical zoom capability.

The audio component 610 is configured to output and/or input audio signals. For example, the audio component 610 includes a microphone (MIC) configured to receive an external audio signal when the device 600 is in an operation mode, such as a call mode, a recording mode, and a voice recognition mode. The received audio signal may be further stored in the memory 604 or transmitted via the communication component 616. In some embodiments, the audio component 610 further includes a speaker to output audio signals.

The I/O interface 612 provides an interface for the processing component 602 and peripheral interface modules, such as a keyboard, a click wheel, buttons, and the like. The buttons may include, but are not limited to, a home button, a volume button, a starting button, and a locking button.

The sensor component 614 includes one or more sensors to provide status assessments of various aspects of the device 600. For instance, the sensor component 614 may detect an open/closed status of the device 600 and relative positioning of components (e.g. the display and the keypad of the device 600). The sensor component 614 may also detect a change in position of the device 600 or of a component in the device 600, a presence or absence of user contact with the device 600, an orientation or an acceleration/deceleration of the device 600, and a change in temperature of the device 600. The sensor component 614 may include a proximity sensor configured to detect the presence of nearby objects without any physical contact. The sensor component 614 may also include a light sensor, such as a CMOS or CCD image sensor, for use in imaging applications. In some embodiments, the sensor component 614 may also include an accelerometer sensor, a gyroscope sensor, a magnetic sensor, a pressure sensor, or a temperature sensor.

The communication component 616 is configured to facilitate wired or wireless communication between the device 600 and other devices. The device 600 can access a wireless network based on a communication standard, such as WIFI, 2G, or 3G, or a combination thereof. In one illustrative embodiment, the communication component 616 receives a broadcast signal or broadcast associated information from an external broadcast management system via a broadcast channel. In one illustrative embodiment, the communication component 616 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In illustrative embodiments, the device 600 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In illustrative embodiments, there is also provided a non-transitory computer readable storage medium including instructions, such as the memory 604 including instructions. The above instructions are executable by the processor 620 in the device 600, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium causes the device 600 to perform a method for warning, if the instruction in the storage medium is executed by the processor of the device 600.

## Claims

1. A method for sending warning information from a first terminal (120), comprising:
receiving (201) an unlocking instruction on a locking interface of the first terminal;
determining whether the received unlocking instruction matches a predetermined unlocking instruction or a predetermined warning instruction stored on the first terminal (120), wherein the predetermined warning instruction corresponds to at least one contact stored in the first terminal (120);
entering (202) a warning state if the received unlocking instruction matches a predetermined warning instruction stored on the first terminal (120);
sending warning information to a second terminal of the at least one contact;
**characterized in that** the method further comprises:
turning the first terminal into a silence state after the warning information has been sent to the second terminal of the at least one contact;
keeping (309) the silence state if receiving a communication message sent from another terminal; and
sending (310) the warning information to the another terminal.

2. The method according to claim 1, wherein the received unlocking instruction includes any one of a numeric password, gesture information, fingerprint information and voice information.

3. The method according to claim 1 or claim 2, wherein:
the silence state comprises at least one of a mute state and a lock-screen state.

4. The method according to any one of claims 1 to 3, wherein the method further comprises hiding, at the first terminal, at least one of the warning information and any received warning reply information, wherein the warning reply information is information replied based on the warning information after the warning information is received by the terminal of the at least one contact; and/or
wherein the method further comprises:
receiving, at the first terminal, a requirement for starting a predetermined function on the first terminal, the requirement being sent from the terminal of the at least one contact, wherein the predetermined function comprises: at least one of a camera function, a video function, a locating function and a recording function;
starting the predetermined function on the first terminal (120) according to the requirement for starting the predetermined function;
sending data collected by the predetermined function to the terminal of the at least one contact; and/or
wherein the method further comprises:
receiving, at the first terminal, a clear instruction on the verification interface;
quitting the warning state if the clear instruction is a predetermined warning clear instruction related to the predetermined warning instruction.

5. The method according to any one of claims 1 to 4, wherein sending warning information to a terminal of the at least one contact comprises:
sending the warning information to the terminal of the at least one contact in at least one of following three ways:
sending a short message comprising the warning information to the terminal of the at least one contact;
initiating a call to the terminal of the at least one contact, reporting the warning information to a terminal of any one of the at least one contact answering the call if the any one of the at least one contact answers the call; and
sending the warning information to the terminal of the at least one contact via a client installed on the first terminal, wherein the client installed on the first terminal comprises: at least one of a microblog, a social application and an email.

6. The method according to any one of claims 1 to 5, wherein
sending warning information to a terminal of the at least one contact comprises:
sending the warning information to the terminal of the at least one contact at a predetermined time interval, the warning information comprising danger indicating information and current positional information of the first terminal (120).

7. A first terminal (120) for sending warning information, comprising:
an unlocking instruction receiving module (410, 501) configured to receive an unlocking instruction on a locking interface of the first terminal;
an unlocking instruction determining module 503 configured to determine whether the received unlocking instruction matches a predetermined unlocking instruction or a predetermined warning instruction stored on the first terminal (120), wherein the predetermined warning instruction corresponds to at least one contact stored in the first terminal (120);
a warning information sending module (420, 502) configured to enter a warning state if the received unlocking instruction matches a predetermined warning instruction stored in the first terminal (120), and to send warning information to a second terminal of the at least one contact; **characterized in that**, the terminal further comprises:
a state turning module (504) configured to turn the first terminal (120) into a silence state after the warning information has been sent to the second terminal (140) of the at least one contact; and
a state keeping module (505) configured to keep the silence state if a communication message is received from another terminal,
wherein the warning information sending module (420) is further configured to send the warning information to the another terminal.

8. The first terminal (120) according to claim 7, wherein the received unlocking instruction includes any one of a numeric password, gesture information, fingerprint information and voice information.

9. The first terminal (120) according to claim 7 or claim 8, wherein the silence state comprises at least one of a mute state and a lock-screen state.

10. The first terminal (120) according to any one of claims 7 to 9, wherein the first terminal (120) further comprises:
a hiding module (506) configured to hide at least one of the warning information and any warning reply information received at the first terminal (120), wherein the warning reply information is information replied based on the warning information after the warning information is received by the terminal of the at least one contact; and/or
wherein the first terminal (120) further comprises:
a starting requirement receiving module (507) configured to receive a requirement for starting a predetermined function on the first terminal (120), the requirement being sent from the terminal of the at least one contact, the predetermined function comprising: at least one of a camera function, a video function, a locating function and a recording function;
a starting module (508) configured to start the predetermined function on the first terminal (120) according to the requirement for starting the predetermined function;
a data sending module (509) configured to send data collected by the predetermined function to the terminal (140) of the at least one contact; and/or
wherein the first terminal (120) further comprises:
a clear instruction receiving module (510) configured to receive a clear instruction on the verification interface;
a state quitting module (511) configured to quit the warning state if the clear instruction is a predetermined warning clear instruction related to the predetermined warning instruction.

11. The first terminal (120) according to any one of claims 7 to 10, wherein the warning information sending module (420, 502) is configured to send the warning information to the terminal of the at least one contact in at least one of following three ways:
sending a short message comprising the warning information to the terminal of the at least one contact corresponding to the predetermined warning instruction;
initiating a call to the terminal of the at least one contact, reporting the warning information to a terminal of any one of the at least one contact answering the call if the any one of the at least one contact answers the call; and
sending the warning information to the terminal of the at least one contact via a client installed on the first terminal (120), wherein the client installed on the first terminal (120) comprises:
at least one of a microblog, a social application and an email.

12. The first terminal (120) according to any one of claims 7 to 11, wherein
the warning information sending module (420, 502) is configured to send the warning information to the terminal of the at least one contact at a predetermined time interval, the warning information comprising danger indicating information and current positional information of the first terminal (120).

## Patentansprüche

1. Verfahren zum Senden von Warninformationen von einem ersten Endgerät (120), das Folgendes aufweist:
Empfangen (201) einer Entsperranweisung auf einer Sperrschnittstelle des ersten Endgeräts;
Bestimmen, ob die empfangene Entsperranweisung mit einer vorbestimmten Entsperranweisung oder einer vorbestimmten Warnanweisung, die im ersten Endgerät (120) gespeichert sind, übereinstimmt, wobei die vorbestimmte Warnanweisung wenigstens einem in dem ersten Endgerät (120) gespeicherten Kontakt entspricht;
Eintreten (202) in einen Warnzustand, falls die empfangene Entsperranweisung mit einer im ersten Endgerät (120) gespeicherten vorbestimmten Warnanweisung übereinstimmt;
Senden von Warninformationen an ein zweites Endgerät des wenigstens einen Kontakts; **dadurch gekennzeichnet, dass** das Verfahren ferner Folgendes aufweist:
Schalten des ersten Endgeräts in einen Stillzustand, nachdem die Warninformationen an das zweite Endgerät des wenigstens einen Kontakts gesendet worden sind;
Halten (309) des Stillzustands, falls eine von einem anderen Endgerät gesendete Kommunikationsnachricht empfangen wird; und
Senden (310) der Warninformationen an das andere Endgerät.

2. Verfahren nach Anspruch 1, wobei die empfangene Entsperranweisung eins der Folgenden enthält: numerisches Passwort, Gesteninformationen, Fingerabdruckinformationen und Sprachinformationen.

3. Verfahren nach Anspruch 1 oder Anspruch 2, wobei:
der Stillzustand wenigstens einen Stummzustand und/oder einen Bildschirmsperrzustand aufweist.

4. Verfahren nach einem der Ansprüche 1 bis 3, wobei das Verfahren ferner am ersten Endgerät das Verbergen von wenigstens einem von den Warninformationen und jedweden empfangenen Warnungsantwortinformationen aufweist, wobei die Warnungsantwortinformationen Informationen sind, die auf Basis der Warninformationen als Antwort gegeben werden, nachdem die Warninformationen durch das Endgerät des wenigstens einen Kontakts empfangen worden sind; und/oder
wobei das Verfahren ferner Folgendes aufweist:
am ersten Endgerät Empfangen einer Anforderung zum Starten einer vorbestimmten Funktion am ersten Endgerät, wobei die Anforderung vom Endgerät des wenigstens einen Kontakts gesendet wird, wobei die vorbestimmte Funktion Folgendes aufweist: wenigstens eine von einer Kamerafunktion, einer Videofunktion, einer Positionsbestimmungsfunktion und einer Aufzeichnungsfunktion;
Starten der vorbestimmten Funktion am ersten Endgerät (120) gemäß der Anforderung zum Starten der vorbestimmten Funktion;
Senden von durch die vorbestimmte Funktion des Endgeräts des wenigstens einen Kontakts erfassten Daten; und/oder
wobei das Verfahren ferner Folgendes aufweist:
am ersten Endgerät Empfangen einer Beseitigungsanweisung auf der Überprüfungsschnittstelle:
Verlassen des Warnzustands, falls die Beseitigungsanweisung eine vorbestimmte Warnungsbeseitigungsanweisung bezogen auf die vorbestimmte Warnanweisung ist.

5. Verfahren nach einem der Ansprüche 1 bis 4, wobei das Senden von Warninformationen an ein Endgerät des wenigstens einen Kontakts Folgendes aufweist:
Senden der Warninformationen an das Endgerät des wenigstens einen Kontakts auf wenigstens eine der folgenden drei Arten:
Senden einer Kurznachricht, die die Warninformationen aufweist, an das Endgerät des wenigstens einen Kontakts;
Einleiten eines Anrufs an das Endgerät des wenigstens einen Kontakts, Melden der Warninformationen einem Endgerät von einem von dem wenigstens einen Kontakt, der den Anruf beantwortet, falls der eine von dem wenigstens einen Kontakt den Anruf beantwortet; und
Senden der Warninformationen an das Endgerät des wenigstens einen Kontakts über einen im ersten Endgerät installierten Client, wobei der im ersten Endgerät installierte Client Folgendes aufweist: wenigstens einen von einem Mikroblog, einer Social-Media-Anwendung und einer E-Mail.

6. Verfahren nach einem der Ansprüche 1 bis 5, wobei
das Senden von Warninformationen an ein Endgerät des wenigstens einen Kontakts Folgendes aufweist:
Senden der Warninformationen an das Endgeräts des wenigstens einen Kontakts in einem vorbestimmten Zeitintervall, wobei die Warninformationen Gefahrenanzeigeinformationen und aktuelle positionsbezogene Informationen des ersten Endgeräts (120) aufweisen.

7. Erstes Endgerät (120) zum Senden von Warninformationen, die Folgendes aufweisen:
ein Entsperranweisungsempfangsmodul (410, 501), das zum Empfangen einer Entsperranweisung einer Sperrschnittstelle des ersten Endgeräts konfiguriert ist;
ein Entsperranweisungsbestimmungsmodul (503), das zum Bestimmen konfiguriert ist, ob die empfangene Entsperranweisung mit einer vorbestimmten Entsperranweisung oder einer vorbestimmten Warnanweisung, die im ersten Endgerät (120) gespeichert sind, übereinstimmt, wobei die vorbestimmte Warnanweisung wenigstens einem in dem ersten Endgerät (120) gespeicherten Kontakt entspricht;
ein Warninformationssendemodul (420, 502), das konfiguriert ist zum Eintreten in einen Warnzustand, falls die empfangene Entsperranweisung mit einer im ersten Endgerät (120) gespeicherten vorbestimmten Warnanweisung übereinstimmt, und zum Senden von Warninformationen an ein zweites Endgerät des wenigstens einen Kontakts; **dadurch gekennzeichnet, dass** das Endgerät ferner Folgendes aufweist:
einen Zustandsumschaltmodul (504), das konfiguriert ist zum Schalten des ersten Endgeräts (120) in einen Stillzustand, nachdem die Warninformationen an das zweite Endgerät (140) des wenigstens einen Kontakts gesendet worden sind; und
ein Zustandshaltemodul (505), das konfiguriert ist zum Halten des Stillzustands, falls von einem anderen Endgerät eine Kommunikationsnachricht empfangen wird,

8. Erstes Endgerät (120) nach Anspruch 7, wobei die empfangene Entsperranweisung eins von den Folgenden enthält: numerisches Passwort, Gesteninformationen, Fingerabdruckinformationen und Sprachinformationen.

9. Erstes Endgerät (120) nach Anspruch 7 oder Anspruch 8, wobei
der Stillzustand einen Stummzustand und/oder einen Bildschirmsperrzustand aufweist.

10. Erstes Endgerät (120) nach einem der Ansprüche 7 bis 9, wobei das erste Endgerät (120) ferner Folgendes aufweist:
ein Verbergungsmodul (506), das konfiguriert ist zum Verbergen von wenigstens einem von den Warninformationen und jedweden am ersten Endgerät (120) empfangenen Warnungsantwortinformationen, wobei die Warnungsantwortinformationen Informationen sind, die auf Basis der Warninformationen als Antwort gegeben werden, nachdem die Warninformationen durch das Endgerät des wenigstens einen Kontakts empfangen worden sind; und/oder
wobei das erste Endgerät (120) ferner Folgendes aufweist:
ein Startanforderungsempfangsmodul (507), das konfiguriert ist zum Empfangen einer Anforderung zum Starten einer vorbestimmten Funktion am ersten Endgerät (120), wobei die Anforderung vom Endgerät des wenigstens einen Kontakts gesendet wird, wobei die vorbestimmte Funktion Folgendes aufweist: wenigstens eine von einer Kamerafunktion, einer Videofunktion, einer Positionsbestimmungsfunktion und einer Aufzeichnungsfunktion;
ein Startmodul (508), das konfiguriert ist zum Starten der vorbestimmten Funktion am ersten Endgerät (120) gemäß der Anforderung zum Starten der vorbestimmten Funktion;
ein Datensendemodul (509), das konfiguriert ist zum Senden von durch die vorbestimmte Funktion des Endgeräts (140) des wenigstens einen Kontakts erfassten Daten; und/oder
wobei das erste Endgerät (120) ferner Folgendes aufweist:
ein Beseitigungsanweisungsempfangsmodul (510), das konfiguriert ist zum Empfangen einer Beseitigungsanweisung auf der Überprüfungsschnittstelle;
ein Zustandsverlassmodul (511), das konfiguriert ist zum Verlassen des Warnzustands, falls die Beseitigungsanweisung eine vorbestimmte Warnungsbeseitigungsanweisung bezogen auf die vorbestimmte Warnanweisung ist.

11. Erstes Endgerät (120) nach einem der Ansprüche 7 bis 10, wobei
das Warninformationssendemodul (420, 502) konfiguriert ist zum Senden der Warninformationen an das Endgerät des wenigstens einen Kontakts auf wenigstens eine der folgenden drei Arten:
Senden einer Kurznachricht, die die Warninformationen aufweist, an das Endgerät des wenigstens einen Kontakts entsprechend der vorbestimmten Warnanweisung;
Einleiten eines Anrufs an das Endgerät des wenigstens einen Kontakts, Melden der Warninformationen einem Endgerät von einem von dem wenigstens einen Kontakt, der den Anruf beantwortet, falls der eine von dem wenigstens einen Kontakt den Anruf beantwortet; und
Senden der Warninformationen an das Endgerät des wenigstens einen Kontakts über einen im ersten Endgerät (120) installierten Client, wobei der im ersten Endgerät (120) installierte Client Folgendes aufweist:
wenigstens eins von einem Mikroblog, einer Social-Media-Anwendung und einer E-Mail.

12. Erstes Endgerät (120) nach einem der Ansprüche 7 bis 11, wobei
Das Warninformationssendemodul (420, 502) konfiguriert ist zum Senden der Warninformationen an das Endgerät des wenigstens einen Kontakts in einem vorbestimmten Zeitintervall, wobei die Warninformationen Gefahrenanzeigeinformationen und aktuelle positionsbezogene Informationen des ersten Endgeräts (120) aufweisen.

## Revendications

1. Procédé d'envoi d'une information de mise en garde d'un premier terminal (120), comprenant :
recevoir (201) une instruction de déverrouillage sur une interface de verrouillage du premier terminal ;
déterminer si l'instruction de déverrouillage reçue concorde avec une instruction de déverrouillage prédéterminée ou avec une instruction de mise en garde prédéterminée stockée sur le premier terminal (120), où l'instruction de mise en garde prédéterminée correspond à au moins un contact stocké dans le premier terminal (120) ;
entrer (202) un état de mise en garde si l'instruction de déverrouillage reçue concorde avec une instruction de mise en garde prédéterminée stockée sur le premier terminal (120) ;
envoyer l'information de mise en garde à un deuxième terminal du au moins un contact ;
**caractérisé en ce que** le procédé comprend en outre :
mettre le premier terminal dans un état silencieux après que l'information de mise en garde a été reçue au deuxième terminal du au moins un contact ;
garder (309) l'état silencieux si réception d'un message de communication envoyé d'un autre terminal ; et
envoyer (310) l'information de mise en garde à l'autre terminal.

2. Procédé selon la revendication 1, dans lequel l'instruction de déverrouillage reçue comprend l'un quelconque d'entre un mot de passe numérique, une information gestuelle, une information d'empreinte digitale et une information vocale.

3. Procédé selon la revendication 1 ou la revendication 2, dans lequel :
l'état silencieux comprend au moins l'un d'entre un état silencieux et un état d'écran verrouillé.

4. Procédé selon l'une quelconque des revendications 1 à 3, dans lequel le procédé comprend en outre cacher, au premier terminal, au moins l'une d'entre l'information de mise en garde et une information quelconque de réponse de mise en garde reçue, où l'information de réponse de mise en garde est une information en réponse basée sur l'information de mise en garde après que l'information de mise en garde a été reçue par le terminal du au moins un contact ; et/ou bien
où le procédé comprend en outre :
recevoir, au premier terminal, un besoin de faire démarrer une fonction prédéterminée sur le premier terminal, le besoin étant envoyé du terminal du au moins un contact, où la fonction prédéterminée comprend : au moins l'une d'entre une fonction de caméra, une fonction vidéo, une fonction de localisation et une fonction d'enregistrement ;
faire démarrer la fonction prédéterminée sur le premier terminal (120) conformément au besoin de faire démarrer la fonction prédéterminée ;
envoyer des données recueillies par la fonction prédéterminée au terminal du au moins un contact ; et/ou bien
où le procédé comprend en outre :
recevoir, au premier terminal, une instruction de suppression sur l'interface de vérification ;
quitter l'état de mise en garde si l'instruction de suppression est une instruction de suppression de mise en garde prédéterminée se rapportant à l'instruction de mise en garde prédéterminée.

5. Procédé selon l'une quelconque des revendications 1 à 4, dans lequel envoyer l'information de mise en garde à un terminal du au moins un contact comprend :
envoyer l'information de mise en garde au terminal du au moins un contact d'au moins l'une des trois manières suivantes :
envoyer un court message comprenant l'information de mise en garde au terminal du au moins un contact ;
lancer un appel au terminal du au moins un contact, signaler l'information de mise en garde à un terminal de l'un quelconque du au moins un contact répondant à l'appel si l'un quelconque du au moins un contact répond à l'appel ; et
envoyer l'information de mise en garde au terminal du au moins un contact par un client installé sur le premier terminal, où le client installé sur le premier terminal comprend : au moins l'un d'entre un microblog, une application sociale et un courriel.

6. Procédé selon l'une quelconque des revendications 1 à 5, dans lequel
envoyer une information de mise en garde à un terminal du au moins un contact comprend :
envoyer l'information de mise en garde au terminal du au moins un contact à un intervalle de temps prédéterminé, l'information de mise en garde comprenant une information indiquant un danger et une information de position courante du premier terminal (120).

7. Premier terminal (120) pour envoyer une information de mise en garde, comprenant :
un module de réception d'instruction de déverrouillage (410, 501) configuré pour recevoir une instruction de déverrouillage sur une interface de verrouillage du premier terminal ;
un module de détermination d'instruction de déverrouillage 503 configuré pour déterminer si l'instruction de déverrouillage reçue concorde avec une instruction de déverrouillage prédéterminée ou avec une instruction de mise en garde prédéterminée stockée sur le premier terminal (120), où l'instruction de mise en garde prédéterminée correspond à au moins un contact stocké dans le premier terminal (120) ;
un module d'envoi d'information de mise en garde (420, 502) configuré pour entrer un état de mise en garde si l'instruction de déverrouillage reçue concorde avec une instructions de mise en garde prédéterminée stockée dans le premier terminal (120), et pour envoyer une information de mise en garde à un deuxième terminal du au moins un contact ; **caractérisé en ce que** le terminal comprend en outre :
un module de mise dans un état (504) configuré pour mettre le premier terminal (120) dans un état silencieux après que l'information de mise en garde a été envoyée au deuxième terminal (140) du au moins un contact ; et
un module de garde d'état (505) configuré pour garder l'état silencieux si un message de communication est reçu d'un autre terminal,
où le module d'envoi d'information de mise en garde (420) est configuré en outre pour envoyer l'information de mise en garde à l'autre terminal.

8. Premier terminal (120) selon la revendication 7, dans lequel l'instruction de déverrouillage reçue comprend l'un quelconque d'entre un mot de passe numérique, une information gestuelle, une information d'empreinte digitale et une information vocale.

9. Premier terminal (120) selon la revendication 7 ou la revendication 8, dans lequel l'état silencieux comprend au moins l'un d'entre un état silencieux et un état d'écran verrouillé.

10. Premier terminal (120) selon l'une quelconque des revendications 7 à 9, dans lequel le premier terminal (120) comprend en outre :
un module de cache (506) configuré pour cacher au moins l'une d'entre une information de mise en garde et une information quelconque de réponse de mise en garde reçue au premier terminal (120), où l'information de réponse de mise en garde est une information en réponse basée sur l'information de mise en garde après que l'information de mise en garde a été reçue par le terminal du au moins un contact ; et/ou bien
où le premier terminal (120) comprend en outre :
un module de réception de besoin de démarrage (507) configuré pour recevoir un besoin de faire démarrer une fonction prédéterminée sur le premier terminal (120), le besoin étant envoyé du terminal du au moins un contact, la fonction prédéterminée comprenant : au moins l'une d'entre une fonction de caméra, une fonction vidéo, une fonction de localisation et une fonction d'enregistrement ;
un module de démarrage (508) configuré pour faire démarrer la fonction prédéterminée sur le premier terminal (120) conformément au besoin de faire démarrer la fonction prédéterminée ;
un module d'envoi de données (509) configuré pour envoyer des données recueillies par la fonction prédéterminée au terminal (140) du au moins un contact ; et/ou bien
où le premier terminal (120) comprend en outre :
un module de réception d'instruction de suppression (510) configuré pour recevoir une instruction de suppression sur l'interface de vérification ;
un module pour quitter un état (511) configuré pour quitter l'état de mise en garde si l'instruction de suppression est une instruction de suppression de mise en garde prédéterminée se rapportant à l'instruction de mise en garde prédéterminée.

11. Premier terminal (120) selon l'une quelconque des revendications 7 à 10, dans lequel
le module d'envoi d'information de mise en garde (420, 502) est configuré pour envoyer l'information de mise en garde au terminal du au moins un contact d'au moins l'une des trois manières suivantes :
envoyer un court message comprenant l'information de mise en garde au terminal du au moins un contact correspondant à l'instruction de mise en garde prédéterminée ;
lancer un appel au terminal du au moins un contact, signaler l'information de mise en garde à un terminal de l'un quelconque du au moins un contact répondant à l'appel si l'un quelconque du au moins un contact répond à l'appel ; et
envoyer l'information de mise en garde au terminal du au moins un contact par un client installé sur le premier terminal (120), où le client installé sur le premier terminal (120) comprend : au moins l'un d'entre un microblog, une application sociale et un courriel.

12. Premier terminal (120) selon l'une quelconque des revendications 7 à 11, dans lequel
le module d'envoi d'information de mise en garde (420, 502) est configuré pour envoyer l'information de mise en garde au terminal du au moins un contact à un intervalle de temps prédéterminé, comprenant une information indiquant un danger et une information de position courante du premier terminal (120).
